# FASCICULE DE BREVET EUROPEEN

(11) **EP 1 139 907 B1**
(45) Date de publication et mention de la délivrance du brevet: **20.04.2005**
(21) Numéro de dépôt: 99959485.6
(22) Date de dépôt: 17.12.1999
(51) Int. Cl.: A61C 13/00, B23Q 35/10

(54) **MACHINE PERMETTANT D'USINER AU MOINS UN VOLUME, NOTAMMENT UN INLAY, DE MANIERE AUTOMATIQUE PAR COPIAGE**
MASCHINE ZUM AUTOMATISCHEN KOPIERBEARBEITEN MINDESTENS EINES WERKSTÜCKS, INSBESONDERE EINES INLAYS
MACHINE FOR MACHINING A VOLUME, IN PARTICULAR AN INLAY, BY AUTOMATIC DUPLICATING

(30) Priorité: 18.12.1998 FR 9815984
(43) Date de publication de la demande: 10.10.2001
(73) Titulaire: Farre, Pierre, 31400 Toulouse (FR)
(72) Inventeur: Farre, Pierre, 31400 Toulouse (FR)
(74) Mandataire: Sommer, Peter
(86) Numéro de dépôt international: PCT/FR1999/003168
(87) Numéro de publication internationale: WO 2000/036992

(56) Documents cités:
- EP-A- 0 543 258
- WO-A-96/05782
- WO-A-98/36871
- US-A- 4 051 748
- US-A- 4 988 294
- US-A- 5 135 393
- PATENT ABSTRACTS OF JAPAN vol. 199, no. 612, 26 décembre 1996 (1996-12-26) & JP 08 197386 A (SUMII TOSHIO), 6 août 1996 (1996-08-06)

## Description

La présente invention se rapporte au domaine des machines permettant un usinage par enlèvement de matière par reproduction d'un modèle, plus particulièrement appliquées au domaine médical, notamment dentaire pour la fabrication de pièces en céramique destinées à remplacer tout ou partie d'une couronne dentaire, et se rapporte notamment aux machines comprenant un outil d'usinage muni d'un axe de symétrie et possédant au moins un degré de liberté en rotation autour dudit axe de symétrie, des moyens d'entraînement en rotation de l'outil d'usinage autour de son axe de symétrie, des moyens de fixation d'une ébauche dans laquelle ledit volume est usiné et possédant au moins un degré de liberté en rotation, des moyens d'entraînement en rotation des moyens de fixation de l'ébauche, des moyens de fixation d'un reproducteur possédant au moins un degré de liberté en rotation, des moyens d'entraînement en rotation des moyens de fixation du reproducteur, un palpeur apte à entrer en contact avec la surface extérieure du reproducteur, des moyens de déplacement relatif entre les moyens de fixation de l'ébauche et l'outil d'usinage d'une part, et entre les moyens de fixation du reproducteur et le palpeur d'autre part, les moyens de déplacement permettant à l'outil d'usinage et au palpeur de rester en contact permanent respectivement avec l'ébauche et le reproducteur.

On connaît le document US-A-5,135,393 qui se rapporte à une méthode et un appareil pour la fabrication de volumes par copiage en dentisterie, notamment d'inlay. La machine utilisée est une machine huit axes dont tous les déplacements des parties mobiles de la machine sont faits manuellement par l'opérateur, à l'exception de la rotation de l'outil qui est assurée par un moteur. Plus précisément, la machine comporte un premier chariot portant un palpeur et un support d'outil solidaires, dont les axes sont parallèles entre eux et perpendiculaires à un axe de déplacement en translation du palpeur et du support d'outil; en outre, ce premier chariot est libre en rotation et en translation suivant des axes parallèle et perpendiculaire respectivement à l'axe de translation du palpeur et de l'outil solidaires ; Ce premier chariot est maintenu en pression et mû par un opérateur lors de l'usinage contre un deuxième chariot libre rotation et qui porte le reproducteur et l'ébauche eux-mêmes libres en rotation sur ce deuxième chariot ; de sorte que, sous la pression et les déplacements induits par l'opérateur, le palpeur parcourt la surface du reproducteur et l'outil usine l'ébauche en conséquence ; le reproducteur et l'ébauche sont par ailleurs liés en rotation de sorte que l'opérateur entraînant en rotation avec une main le reproducteur, l'ébauche suive ce mouvement de rotation, alors qu'avec l'autre main l'opérateur prend soin de faire parcourir au palpeur la surface du reproducteur. Une telle machine est complexe, onéreuse du fait d'un nombre important de degrés de liberté et délicate d'utilisation car la précision du copiage est fonction de la qualité de prestation fournie par l'opérateur.

L'art antérieur enseigne notamment une machine de ce type avec le document WO 96/05782, comportant un outil d'usinage diamanté actionné par une turbine à grande vitesse, un palpeur placé sur le même corps de machine que l'outil, l'outil et le palpeur étant mobiles en translation et en rotation afin de suivre le profil d'un modèle fixé en alignement avec l'ébauche, une telle machine permettant la reproduction précise d'un modèle, mais entraînant un mécanisme lourd, volumineux et coûteux, notamment en raison des grandes vitesses de rotation de l'outil. En outre, l'outil de faible diamètre permettant la reproduction de petits détails, qui tourne à grande vitesse peut présenter une usure rapide et donc un coût élevé d'utilisation de la machine.

Le document EP - A- 0 543 258, qui est considéré comme l'état de la technique le plus proche de la présente invention, décrit une machine permettant d'usiner un volume de matière automatique par copiage, comprenant :
- un disque abrasif muni d'un axe de symétrie et possédant un degré de liberté en rotation autour dudit axe de symétrie, ainsi que des moyens d'entraînement en rotation dudit disque abrasif autour de son axe de symétrie,
- des moyens de fixation d'une ébauche dans laquelle ledit volume est usiné, possédant au moins un degré de liberté en rotation, ainsi que des moyens d'entraînement en rotation desdits moyens de fixation de l'ébauche
- des moyens de fixation d'un reproducteur, possédant au moins un degré de liberté en rotation ainsi que des moyens d'entraînement en rotation desdits moyens de fixation du reproducteur
- un palpeur apte à entrer en contact avec la surface extérieure dudit reproducteur,
- des moyens de déplacement relatif entre lesdits moyens de fixation de l'ébauche et ledit disque abrasif d'une part, et entre lesdits moyens de fixation du reproducteur et ledit palpeur d'autre part, lesdits moyens de déplacement permettant au disque abrasif et au palpeur de rester en contact permanent respectivement avec ladite ébauche et ledit reproducteur,
- des moyens de commande et de contrôle desdits moyens d'entraînement en rotation du disque abrasif, desdits moyens d'entraînement en rotation des moyens de fixation du reproducteur, et desdits moyens de déplacement,
- lesdit moyens de déplacement comprenant un chariot mobile sur lequel sont montés libre en rotation lesdits moyens de fixation de l'ébauche et lesdits moyens de fixation du reproducteur, ledit chariot mobile possédant au moins deux degrés de liberté de translation.

La présente invention propose essentiellement de pallier ces inconvénients et d'apporter d'autres avantages. Plus précisément, elle consiste en une machine permettant d'usiner au moins un volume, notamment un inlay, de manière automatique par copiage, selon la revendication 1.

Le disque abrasif qui permet de réduire la vitesse de rotation de l'outil d'usinage de manière sensible, et l'agencement des moyens de déplacement qui permettent de déplacer l'ébauche et le reproducteur et non plus l'outil d'usinage, entraînent une forte réduction du poids, et du coût de la machine.

Selon une caractéristique avantageuse, lesdits deux degrés de liberté dudit chariot mobile sont un degré de liberté en rotation et un degré de liberté en translation, et lesdits moyens de déplacement comprennent des moyens d'entraînement en translation et des moyens d'entraînement en rotation dudit chariot mobile.

Selon une caractéristique avantageuse de la précédente, la machine selon l'invention comprend un support rigide, et lesdits moyens d'entraînement en translation dudit chariot mobile comportent un premier moteur lié de manière complète au dit support rigide, en ce que lesdits moyens d'entraînement en rotation desdits moyens de fixation de l'ébauche et desdits moyens de fixation du reproducteur comportent un deuxième moteur lié au dit premier moteur par l'intermédiaire d'une liaison vis-écrou, et ledit chariot mobile est libre en rotation autour de l'arbre de sortie dudit deuxième moteur, ledit arbre de sortie étant guidé en rotation et en translation par ledit support rigide.

Selon une caractéristique avantageuse de la précédente, lesdits moyens d'entraînement en rotation dudit chariot mobile autour de l'arbre de sortie dudit deuxième moteur comprennent les forces de frottements engendrées par la rotation desdits moyens de fixation de l'ébauche et desdits moyens de fixation du reproducteur.

Selon une caractéristique avantageuse de la précédente, lesdits moyens de fixation de l'ébauche et lesdits moyens de fixation du reproducteur sont liés de manière complète et possèdent des axes de rotation alignés.

Selon une caractéristique avantageuse de la précédente, l'axe de rotation dudit disque abrasif est parallèle aux axes de rotation desdits moyens de fixation de l'ébauche et desdits moyens de fixation du reproducteur, ledit support rigide comprenant une paroi plane perpendiculaire au dit axe de rotation du disque abrasif permettant une séparation entre un compartiment usinage et un compartiment moteur.

Selon une caractéristique avantageuse de la précédente, l'axe de rotation dudit disque abrasif et l'arbre de sortie dudit deuxième moteur sont montés dans des supports de paliers respectifs identiques.

La paroi plane perpendiculaire aux axes de rotation permet un montage plus aisé des supports de paliers, et l'usage de supports de paliers identiques diminue les coûts de fabrication.

Selon une caractéristique avantageuse, ledit palpeur est fixé rigidement au dit support rigide, afin de compenser par son abrasion résultant du frottement avec le reproducteur, l'usure dudit disque abrasif, rendant ainsi la précision de la reproduction indépendante de l'usure de l'outil.

Selon une autre caractéristique avantageuse, la machine selon l'invention comporte des moyens de déplacement radial dudit palpeur, permettant d'établir un rapport dimensionnel de reproduction déterminé de l'inlay par rapport au reproducteur, dans un plan perpendiculaire à un axe de rotation dudit reproducteur.

Cette caractéristique permet de faire varier le rapport de reproduction radial sans faire varier le rapport de reproduction axial, utilisée notamment dans le cas de la fabrication d'inlays, afin de ménager un espace de collage ou de compenser les erreurs pouvant gêner l'ajustage, ceci sans nuire à la dimension longitudinale.

Selon une autre caractéristique avantageuse, ledit palpeur comporte une épaisseur supérieure à l'épaisseur dudit disque abrasif pour augmenter la dimension longitudinale de l'inlay par rapport à celle dudit reproducteur.

Cette caractéristique permet, outre une compensation des erreurs de planéité ou dues aux vibrations du disque, une compensation de l'enlèvement de matière effectué lors du polissage de la pièce terminée.

Selon une autre caractéristique avantageuse, lesdits moyens de fixation de l'ébauche et lesdits moyens de fixation du reproducteur sont liés par une liaison vis-écrou, lesdits moyens de fixation de l'ébauche étant fixés de manière rigide sur l'un desdits éléments vis ou écrou, et lesdits moyens de fixation du reproducteur étant fixés de manière rigide sur l'autre complémentaire desdits éléments vis ou écrou.

Cette caractéristique permet une meilleure ergonomie de la machine selon l'invention les moyens de fixation de l'ébauche étant assujettis aux moyens de fixation du reproducteur par une liaison vis-écrou. Ainsi, l'opérateur peut aisément avec ses deux mains assembler l'ébauche et le reproducteur, chacun dans une main respectivement, et démonter par un mouvement inverse la pièce obtenue et le reproducteur, ceci sans immobiliser l'axe de rotation de ces derniers. Cette caractéristique permet en outre de supprimer tout jeu éventuel entre l'ébauche et le reproducteur.

Selon une autre caractéristique avantageuse, la machine selon l'invention comprend des moyens d'arrêt automatique de fonctionnement en fin d'usinage par détection d'une position déterminée dudit chariot mobile. En fin d'usinage, le palpeur ne maintenant plus le reproducteur, le chariot mobile se déplace vers l'axe de symétrie du disque abrasif, les moyens d'arrêt automatique pouvant être avantageusement actionnés lors de ce déplacement.

Selon une autre caractéristique avantageuse, la machine selon l'invention comprend un disque abrasif sur toute ou partie de ses deux faces opposées, lesdites deux faces opposées étant convergentes vers la périphérie du disque. Le disque travaillant essentiellement sur la face en opposition au mouvement de déplacement du chariot mobile, un retournement du disque dont une face est usée permet de doubler la durée de vie de ce disque.

Selon une autre caractéristique avantageuse, la machine selon l'invention comprend des moyens d'asservissement desdits moyens de déplacement à l'effort exercé par le disque abrasif sur l'ébauche. Une telle caractéristique permet d'optimiser le temps d'usinage.

Selon une autre caractéristique avantageuse, la machine selon l'invention comprend des moyens de lubrification dudit disque d'usinage par barbotage. Cette caractéristique permet d'éviter l'utilisation d'une pompe de circulation pour la lubrification de l'usinage.

Selon une autre caractéristique avantageuse, la machine selon l'invention comprend des moyens d'inversion du sens de rotation dudit disque abrasif. Il est alors possible d'utiliser les deux côtés opposés des grains abrasifs d'un disque, optimisant ainsi le coût d'utilisation de la machine.

Selon une autre caractéristique avantageuse, la machine selon l'invention comprend des moyens de dégagement automatique dudit chariot mobile en fin d'usinage. Ceci permet d'obtenir une meilleure ergonomie, un dégagement automatique du chariot mobile en fin d'usinage permettant un accès plus facile pour un démontage de la pièce usinée et du reproducteur.

Selon une autre caractéristique avantageuse, la machine selon l'invention comprend un gabarit de centrage permettant d'assurer une fixation de l'ébauche sur lesdits moyens de fixation de l'ébauche, et une fixation du reproducteur sur lesdits moyens de fixation du reproducteur de telle sorte que l'inlay à obtenir soit inscrit dans le volume de l'ébauche. Cette caractéristique permet d'éviter que le volume qui doit être usiné soit positionné par rapport au reproducteur de telle sorte qu'il existerait sur le volume des manques de matière par rapport à ce dernier.

Selon une autre caractéristique avantageuse, ladite ébauche et ledit reproducteur sont fixés sur leurs moyens de fixation respectifs par au plus une de leurs extrémités respectives.

D'autres caractéristiques et avantages apparaîtront à la lecture de la description qui suit d'un exemple de mode de réalisation d'une machine selon l'invention, accompagnée des dessins annexés, exemple donné à titre d'illustration et sans qu'aucune interprétation restrictive de l'invention ne puisse en être tirée.
La figure 1 représente une vue de dessus partielle schématique en coupe suivant la ligne II-II de la figure 2, d'un exemple de mode de réalisation d'une machine selon l'invention permettant d'usiner au moins un volume, notamment un inlay, de manière automatique par copiage.
La figure 2 représente une vue en coupe transversale suivant la ligne I-I de la figure 1.
La figure 3 représente un premier détail agrandi de la machine selon la figure 1.
La figure 4 représente un exemple de mode de réalisation d'un gabarit de centrage pour la machine selon la figure 1.

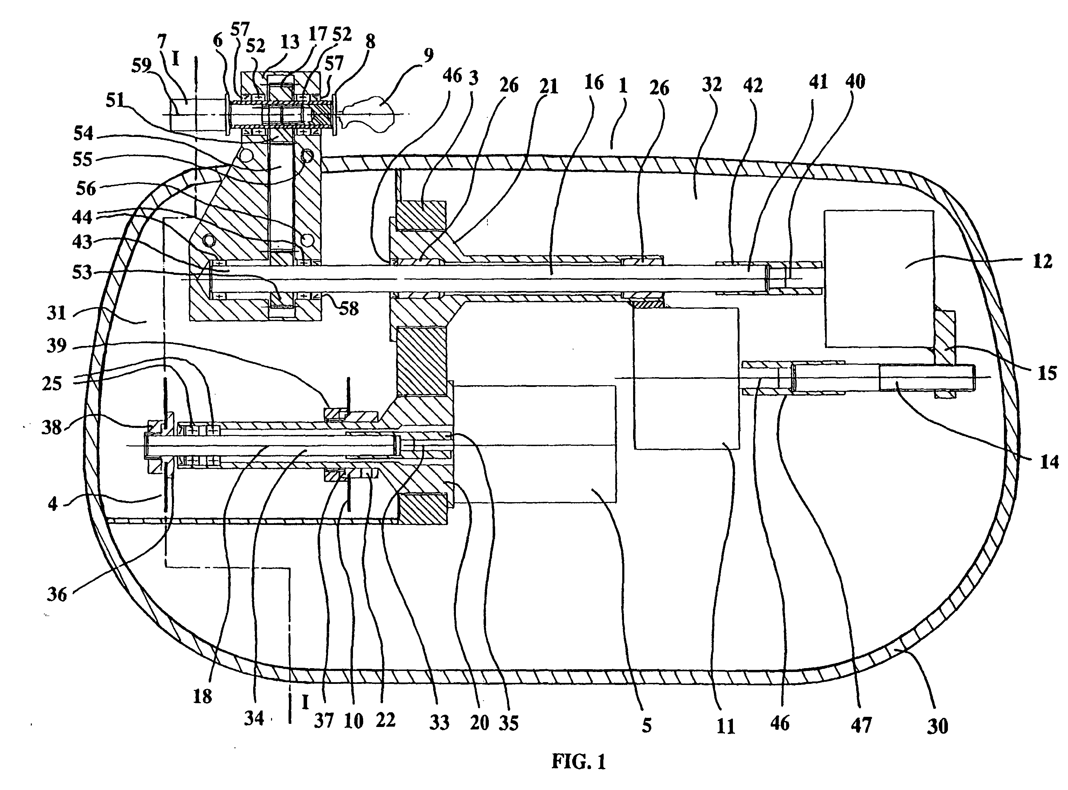

La machine 1 représentée sur la figure 1, permettant d'usiner au moins un volume, notamment un inlay, de manière automatique par copiage, comprend un disque abrasif 4 muni d'un axe de symétrie 18 et possédant au moins un degré de liberté en rotation autour de l'axe de symétrie 18, des moyens d'entraînement en rotation 5 du disque abrasif 4 autour de son axe de symétrie, des moyens de fixation 6 d'une ébauche 7 dans laquelle le volume est usiné et possédant au moins un degré de liberté en rotation, des moyens d'entraînement en rotation 12, 16, 17 des moyens de fixation 6 de l'ébauche, des moyens de fixation 8 d'un reproducteur 9 possédant au moins un degré de liberté en rotation, des moyens d'entraînement en rotation 12, 16, 17 des moyens de fixation 8 du reproducteur, un palpeur 10 apte à entrer en contact avec la surface extérieure du reproducteur, des moyens de déplacement 11, 13, 14, 15, 16 relatif entre les moyens de fixation 6 de l'ébauche et le disque abrasif 4 d'une part, et entre les moyens de fixation 8 du reproducteur et le palpeur 10 d'autre part, les moyens de déplacement permettant au disque abrasif 4 et au palpeur 10 de rester en contact permanent respectivement avec l'ébauche et le reproducteur, des moyens de commande et de contrôle des moyens d'entraînement en rotation 5 du disque abrasif 4, et des moyens d'entraînement en rotation 12 des moyens de fixation du reproducteur 9, et des moyens de déplacement 11.

Les moyens de déplacement comprennent un chariot mobile 13 sur lequel sont montés libres en rotation les moyens de fixation 6 de l'ébauche 7 et les moyens de fixation 8 du reproducteur 9, le chariot mobile 13 possédant avantageusement deux degrés de liberté de mouvement, soit un degré de liberté en rotation et un degré de liberté en translation. Les moyens de déplacement comprennent en outre des moyens d'entraînement en translation 11, 14, 15 et des moyens d'entraînement en rotation du chariot mobile 13.

La machine représentée sur la figure 1 comprend en outre un support rigide 3. Les moyens d'entraînement en translation du chariot mobile 13 comportent un premier moteur 11 lié de manière complète au support rigide 13. Les moyens d'entraînement en rotation des moyens de fixation 6 de l'ébauche 7 et des moyens de fixation 8 du reproducteur 9 comportent un deuxième moteur 12 lié au premier moteur 11 par l'intermédiaire d'une liaison vis-écrou 14 et 15, le chariot mobile 13 étant libre en rotation autour de l'arbre de sortie 16 du deuxième moteur, l'arbre de sortie 16 étant guidé en rotation et en translation par l'intermédiaire d'un support de paliers 21 rigidement fixé sur le support rigide 3, comme représenté sur la figure 1 et expliqué en détail plus loin.

L'axe de rotation 18 du disque abrasif 4 est parallèle aux axes de rotation des moyens de fixation 6 de l'ébauche 7 et des moyens de fixation 8 du reproducteur 9, le support rigide 3 adoptant avantageusement la forme d'une paroi plane, perpendiculaire à l'axe de rotation 18 du disque abrasif 4, permettant ainsi une séparation entre un compartiment usinage 31 et un compartiment moteur 32. L'axe de rotation 18 du disque abrasif 4 est monté dans un support de paliers 20 avantageusement identique au support de paliers 21 guidant l'arbre de sortie 16 du deuxième moteur 12, comme représenté sur la figure 1. L'identité des supports de paliers 20 et 21 confère à la machine selon l'invention une simplicité de conception et une diminution des coûts de revient de fabrication.

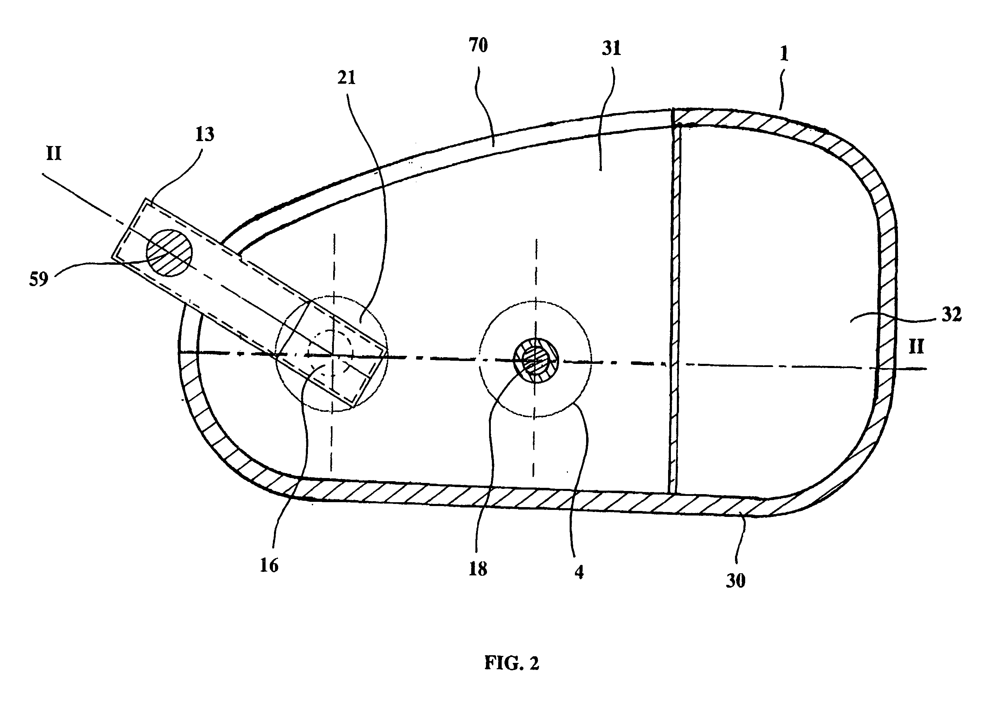

L'ensemble des moyens constitutifs de la machine selon l'invention sont logés de manière avantageuse dans un carter 30 enveloppant assurant une fonction de protection de ces moyens constitutifs, une fonction de récipient pour un liquide lubrifiant d'usinage comme cela sera développé plus loin, et une fonction d'esthétique de la machine, comme représenté sur les figures 1 et 2. Le support rigide 3 adoptera de préférence la forme d'une paroi plane apte à supporter rigidement d'une part le support de paliers 20 sur lequel sont avantageusement montés libre en rotation l'arbre 34 du disque abrasif 4, de manière rigide le support 22 du palpeur 10 et le moteur d'entraînement 5, et d'autre part le support de paliers 21 sur lequel sont avantageusement montés de manière rigide le moteur 11, et libre en rotation et en translation l'arbre de sortie 16.

L'arbre de sortie 33 du moteur d'entraînement 5 est accouplé en rotation de toute manière connue, par exemple par l'intermédiaire d'un manchon 35 d'accouplement, à un arbre 34 sur lequel est centré et fixé le disque abrasif 4, comme représenté sur la figure 1. L'arbre 34 est guidé en rotation dans le support de paliers 20 de toute manière appropriée en fonction de la vitesse de rotation du disque, par l'intermédiaire de roulements 25 à billes ou à aiguilles par exemple pour un disque tournant à une vitesse de l'ordre de 250 tours par seconde environ. Une bague d'étanchéité sera placée autour de l'arbre 34, comme représenté sur la figure 1, afin de retenir le fluide lubrifiant dans le compartiment d'usinage 31. Le disque abrasif 4 sera fixé de manière démontable sur l'arbre 34, par exemple par l'intermédiaire d'un mandrin 36 muni d'un écrou central 38, afin de pouvoir assurer son changement, et pourra être avantageusement monté de manière réversible pour le cas préférentiel où le disque est abrasif sur toute ou partie de ses deux faces opposées, afin de permettre un retournement du disque. Le disque abrasif sera de préférence un disque diamanté dont les deux faces opposées sont convergentes vers la périphérie du disque, une section transversale suivant un rayon du disque formant de préférence un triangle isocèle dont le sommet est constitué par la périphérie du disque.

Le palpeur 10 est avantageusement fixé rigidement au support rigide 3, plus précisément au support de paliers 20 lui-même lié de manière complète et rigide au support 3, comme représenté sur la figure 1. Un montage fixe du palpeur 10 permet de compenser par son abrasion résultant du frottement avec le reproducteur 9 tournant, l'usure du disque abrasif 4. Comme représenté sur la figure 1 par exemple, le palpeur 10 lié à un manchon 22 est pris en sandwich dans une liaison vis-écrou 39, le manchon 22 étant fixé rigidement et de manière réglable en rotation autour du support de paliers 21 grâce à un alésage central. Une vis radiale pointeau (non représentée) peut par exemple être utilisée pour immobiliser le manchon sur le support de paliers 20.

La machine représentée en figure 1 comporte avantageusement des moyens de déplacement radial du palpeur 10, permettant d'établir un rapport dimensionnel de reproduction déterminé de l'inlay par rapport au reproducteur 9, dans un plan perpendiculaire à un axe de rotation du reproducteur. Les moyens de déplacement radial sont avantageusement constitués par un épaulement 37 formé sur le manchon 22 et excentré par rapport à l'alésage de centrage de ce dernier sur le support de paliers 20. Ainsi, la rotation du manchon 22 autour du support de paliers 20 permet de déplacer le palpeur 10 radialement grâce à l'excentration de l'épaulement 37.

Dans la mesure où le palpeur 10 est fixe, ce dernier peut adopter la forme d'un secteur de disque dont la partie périphérique reproduit une partie de la périphérie du disque abrasif 4.

La machine peut comporter avantageusement un moyen de déplacement axial du manchon 22 pouvant ainsi permettre l'usinage d'ébauche plus courte. Ce moyen de déplacement axial peut par exemple être constitué d'une bague (non représentée) intermédiaire entre le manchon 22 et le support de paliers 20 ; la bague intermédiaire sera libre en translation sur le support de paliers, et le manchon 22 libre en rotation sur la bague intermédiaire, ou inversement.

De manière avantageuse, le palpeur 10 comporte une épaisseur supérieure à l'épaisseur du disque abrasif 4 pour augmenter la dimension longitudinale de la pièce à obtenir, par exemple un inlay, par rapport à celle du reproducteur 9, et également pour compenser les erreurs de planéité ou dues aux vibrations du disque. L'augmentation de la dimension longitudinale de la copie permet de compenser l'enlèvement de matière dû au polissage nécessaire de la pièce après usinage sur la machine selon l'invention.

L'arbre de sortie 16 est lié en rotation à une première 41 de ses extrémités à l'arbre d'entraînement en rotation 40 du deuxième moteur 12 par l'intermédiaire ou non d'un manchon d'accouplement 42, et est lié en translation mais en rotation libre à sa deuxième 43 extrémité au chariot mobile 13 de préférence par l'intermédiaire de paliers à roulement 44, par exemple paliers à billes, à aiguilles, ou analogue, comme représenté sur la figure 1. L'arbre de sortie 16 est guidé en rotation et en translation dans le support de paliers 21 de préférence grâce à des paliers lisses 26. Une bague d'étanchéité 46 est mise en place autour de l'arbre 16 afin d'assurer l'étanchéité du compartiment moteur 32 au fluide lubrifiant se trouvant dans le compartiment d'usinage 31.

Le corps du premier moteur 11 est fixé rigidement au support de paliers 21, et son arbre d'entraînement en rotation 46 est lié en rotation à la vis 14 par l'intermédiaire ou non d'un manchon d'accouplement 47. La vis 14 est engagée dans un écrou 15 lié en rotation et en translation au corps du deuxième moteur 12, comme représenté sur la figure 1, de manière à ce que la rotation de l'arbre d'entraînement 46 du premier moteur 11 entraîne un déplacement en translation du corps du deuxième moteur 12 sans provoquer une rotation de celui-ci, induisant un déplacement en translation de l'arbre 16 portant le chariot mobile 13.

Le premier 11 moteur est de préférence un moteur pas à pas permettant d'engendrer un déplacement en translation de l'arbre 16 de l'ordre de 1 à 2 mm par minute; le deuxième 12 moteur est de préférence un moteur pas à pas permettant d'engendrer une rotation de l'arbre 16 de l'ordre de un tour par seconde ; le moteur d'entraînement 5 du disque abrasif doit permettre une vitesse de rotation du disque de l'ordre de 250 tours par seconde.

Le chariot mobile 13 se présente sous la forme d'un bras à une première extrémité duquel est lié l'arbre de sortie 16 comme expliqué précédemment et à la deuxième extrémité duquel sont montés libres en rotation les moyens de fixation 6 de l'ébauche et lesdits moyens de fixation 8 du reproducteur 9, comme représenté sur la figure 1. A l'intérieur du chariot est placée une transmission du mouvement de rotation de l'arbre de sortie 16 vers les moyens de fixation de l'ébauche et du reproducteur, par exemple une transmission par courroie 17 comme représenté sur la figure 1.

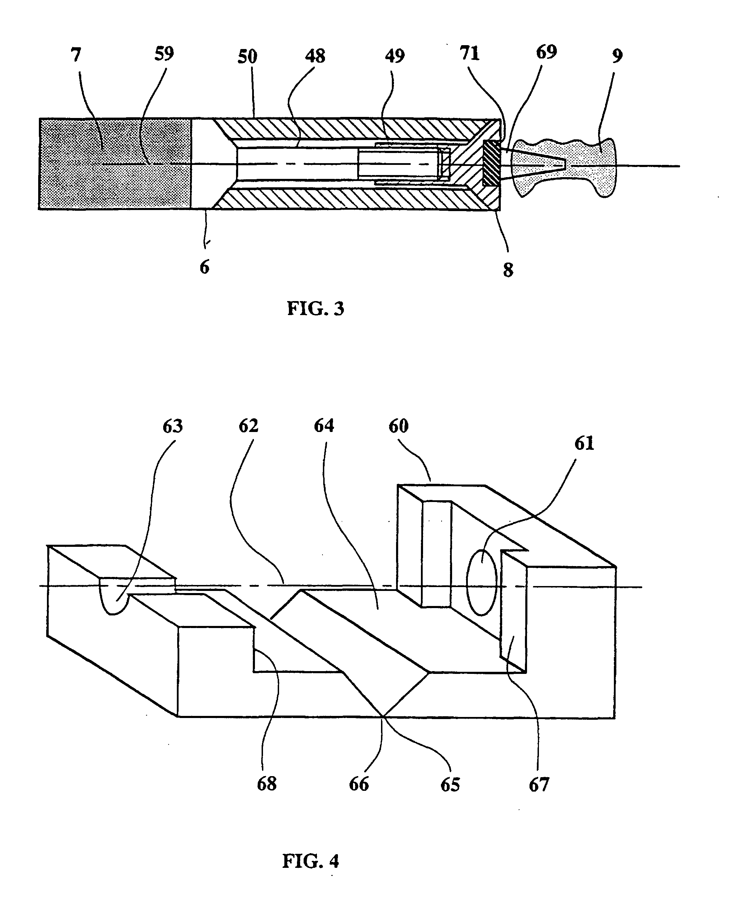

Les moyens de fixation 6 de l'ébauche 7 et les moyens de fixation 8 du reproducteur 9 sont avantageusement liés de manière complète et possèdent des axes de rotation alignés formant un axe unique 59, par une liaison démontable exerçant une traction réciproque des uns vers les autres, de préférence une liaison vis-écrou 48, 49 comme représenté plus particulièrement sur la figure 3. Les moyens de fixation 6 de l'ébauche 7 sont solidaires de l'un des éléments vis 48 ou écrou 49 de la liaison vis-écrou, et les moyens de fixation 8 du reproducteur 9 sont solidaires de l'autre complémentaire des éléments vis ou écrou de la liaison vis-écrou. Les moyens de fixation 8 du reproducteur 9 peuvent être constitués par la tête de de l'écrou 49 et les moyens de fixation 6 de l'ébauche 7 peuvent être constitués par la tête de la vis 48, comme représenté sur la figure 3.

Un élément tubulaire 50 sera avantageusement pris en sandwich entre la vis 48 et l'écrou 49, assurant par l'intermédiaire de portées de préférence coniques à ses extrémités, un alignement des moyens de fixation 6 de l'ébauche et des moyens de fixation 8 du reproducteur. L'élément tubulaire 50 est solidaire d'une roue 51 de prise de la courroie 17 d'entraînement en rotation, comme représenté sur la figure 1. L'arbre de sortie 16 est solidaire d'une roue 53 sur laquelle la courroie 17 est en prise pour transmettre le mouvement de rotation à l'élément tubulaire 50. Comme représenté sur la figure 1, la transmission par courroie 51, 53, 17 est montée de préférence à l'intérieur du chariot mobile 13 où un logement 54 est réalisé à cet effet. Afin d'accéder au logement 54, le chariot mobile peut adopter une structure en deux parties assemblées et positionnées l'une sur l'autre de manière démontable aux moyens de vis 55 et de pions 56 respectivement, par exemple. Les roues 53 et 51 seront de préférence placées entre les deux paliers 44 supports de l'arbre de sortie 16 et les deux paliers 52 supports de l'élément tubulaire 50, respectivement. Comme représenté sur la figure 1, des bagues d'étanchéité 57, 58 seront montées autour de l'élément tubulaire 50 et de l'arbre de sortie 16 afin de protéger la transmission par courroie et les paliers placés à l'intérieur du chariot mobile 13, du fluide lubrifiant placé dans le compartiment 31 d'usinage.

Le montage vis-écrou 48-49 permet à l'utilisateur, après avoir fixé l'ébauche et le reproducteur sur la tête de vis et la tête d'écrou respectivement, comme cela sera expliqué plus loin, de monter ces éléments sur la machine chacun dans une main, par une opération de vissage à travers l'élément tubulaire 50. Grâce à la liaison vis-écrou 48, 49 en coopération avec les portées coniques décrites plus haut, les supports de l'ébauche et du reproducteur sont montés sans jeu et correctement alignés sur un même axe de rotation. L'élément tubulaire 50 est monté libre en rotation sur le chariot 13 par l'intermédiaire de deux paliers à roulement 52 de préférence, comme représenté sur la figure 1.

La machine selon l'invention comprend avantageusement en tout ou partie d'elle-même un gabarit 60 de centrage permettant d'assurer une fixation de l'ébauche 7 sur les moyens de fixation 6 de l'ébauche, et une fixation du reproducteur 9 sur les moyens de fixation 8 du reproducteur de telle sorte que la pièce à obtenir, notamment l'inlay, soit inscrite dans le volume initial de l'ébauche.

Un exemple de mode de réalisation d'un tel gabarit est représenté sur la figure 4, agrandi et en perspective. Le gabarit 60 comprend un logement 61, de préférence tubulaire, représentant la forme extérieure de l'ébauche et pouvant être légèrement plus petit pour compenser les erreurs de positionnements, le logement 61 définissant un axe de symétrie 62, et un logement 63 similaire au logement 61 mais ouvert vers le haut et dont l'axe de symétrie est colinéaire à l'axe 62. Entre les logements 61 et 63, le gabarit forme un dégagement 64 complémentaire de la forme extérieure du chariot mobile 13 afin que ce dernier puisse y être inséré et positionné de manière que l'axe 62 du gabarit soit parallèle à l'axe de rotation 59 des moyens de fixation de l'ébauche 7 et du reproducteur 9. Le gabarit 60 et/ou le chariot mobile 13 seront munis de tout moyen permettant à l'opérateur d'effectuer aisément un positionnement parallèle des axes 62 et 59 et de maintenir l'un par rapport à l'autre dans cette position le temps nécessaire à la fixation de l'ébauche et du reproducteur sur leurs moyens de fixation respectifs. Les formes extérieures du gabarit 60 et du chariot mobile 13 seront avantageusement utilisées à cet effet pour permettre un emboîtement de ces derniers dans la position désirée et expliquée plus haut. Les parois planes 67 et 68 peuvent être utilisées pour servir d'appui contre le chariot mobile.

Afin de faciliter l'opération consistant à emboîter le gabarit 60 sur le chariot mobile 13, le gabarit pourra avantageusement être doté d'un moyen de charnière 65 permettant d'ouvrir le dégagement 64 en pliant le gabarit selon un axe perpendiculaire à l'axe 62, comme représenté sur la figure 4. Le moyen de charnière sera de préférence réalisé par un amincissement 66 d'une section perpendiculaire à l'axe 62, en jouant sur la flexibilité d'un matériau plastique composant en ce cas de manière préférentielle le gabarit 60.

Le logement 61 tubulaire du gabarit sera d'une forme complémentaire de celle de l'ébauche couvrant le volume du reproducteur utilisé. On comprend donc qu'il peut exister autant de gabarits que de formes essentielles de reproducteur possibles en fonction des applications envisagées. Le logement 63 ouvert du gabarit sera d'une forme complémentaire de celle de l'ébauche afin de permettre un guidage de celle-ci vers les moyens de fixation correspondants, dans une direction parallèle au logement 61 tubulaire et parallèle à l'axe 59.

Le reproducteur 9 est d'abord fixé par une de ses extrémités sur ses moyens de fixation 8, de préférence par collage, en répartissant de préférence la matière régulièrement autour de l'axe de rotation 59 des moyens de fixation. Les moyens de fixation 8 peuvent comprendre une pointe 69 formée sur la tête de l'écrou 49 par exemple, qui pénétrera dans un logement complémentaire du reproducteur 9 afin d'assurer une meilleure fixation, comme représenté sur la figure 3. La pointe 69 sera fixée par l'intermédiaire d'un isolant 71 à la tête de l'écrou 49. Les moyens de fixation 8 du reproducteur 9 avec le reproducteur associé sont ensuite montés sur la machine 1 par l'intermédiaire de la liaison vis-écrou 48, 49 comme décrit plus haut. Ensuite, le gabarit 60 est mis en place sur le chariot mobile 13 en insérant le reproducteur 9 dans le logement tubulaire 61. L'ébauche 7 est enfin fixée, de préférence par collage, par une de ses extrémités sur les moyens de fixation 6 correspondants, selon une position ainsi donnée par le gabarit 60 de façon que le volume du reproducteur 9 soit inscrit dans le volume de l'ébauche 7.

L'axe de rotation 59 de l'ébauche 7 et du reproducteur 9 est parallèle à l'axe de rotation 18 du disque abrasif et la partie du palpeur 10 en contact avec le reproducteur 9 est alignée avec la partie périphérique de travail du disque abrasif 4 selon une droite parallèle à l'axe 18 pour obtenir une copie identique au reproducteur dans un plan perpendiculaire aux axes 59 et 18.

Lorsque le moteur 12 entraîne en rotation l'ébauche 7 et le reproducteur 9 dans un sens déterminé, par l'intermédiaire de l'arbre de sortie 16, de la transmission par courroie 17, 51, 53, des moyens de fixation 6 de l'ébauche et des moyens de fixation 8 du reproducteur 9, les forces de frottement dues à l'entraînement en rotation provoquent un couple tendant faire tourner le chariot mobile 13 autour de l'arbre de sortie 16, et donc à maintenir en appui le reproducteur 9 et l'ébauche 7 sur le palpeur 10 et le disque abrasif 4, respectivement. Ces forces de frottement peuvent agir conjointement aux forces de gravité et/ou aux forces engendrées par l'action d'un ressort (non représenté), le cas échéant. Dans le cas où le moteur 12 entraîne en rotation l'ébauche 7 et le reproducteur 9 dans le sens contraire au précédent, il est nécessaire d'utiliser les forces de gravité et/ou les forces engendrées par l'action d'un ressort comme expliqué ci-dessus.

La machine comprend avantageusement des moyens d'inversion du sens de rotation dudit disque abrasif 4 qui peut ainsi travailler en opposition ou en avalant selon qu'il tourne dans un sens ou dans l'autre, ceci afin d'optimiser l'usure du disque avant son remplacement pour usure.

Les moyens de commande et de contrôle (non représentés) des moyens d'entraînement en rotation de l'outil d'usinage, des moyens d'entraînement en rotation des moyens de fixation du reproducteur et de l'ébauche, et des moyens de déplacement, comprennent une alimentation électrique, de préférence une alimentation basse tension continue disposée à l'extérieur du carter 30 de la machine 1 et reliée à cette dernière au compartiment 32 moteur par un cordon d'alimentation et une fiche électrique étanches (non représentés), une électronique de commande et de contrôle (non représentée) placée dans le compartiment 32 moteur, un logiciel de pilotage automatique d'un cycle au moins de fabrication.

La machine représentée sur la figure 1 comprend avantageusement des moyens d'arrêt automatique de fonctionnement en fin d'usinage par détection d'une position déterminée du chariot mobile 13, par exemple lorsque le palpeur 10 est voisin de ou sur l'axe 59 de rotation du reproducteur.

La machine représentée sur la figure 1 comprend en outre avantageusement des moyens d'asservissement des moyens de déplacement du chariot mobile 13, plus particulièrement du moteur 11 de déplacement en translation du chariot, à l'effort exercé par le disque abrasif 4 sur l'ébauche 7.

Le compartiment d'usinage 31 sera rempli jusqu'à un niveau déterminé d'un fluide lubrifiant, notamment de l'eau, afin d'assurer une lubrification et un refroidissement corrects par barbotage du disque abrasif 4, et sera rendu étanche afin que le fluide ne pénètre pas dans le compartiment moteur 32.

La machine représentée sur la figure 1 comprend en outre avantageusement des moyens de dégagement automatique du chariot mobile 13 en fin d'usinage, consistant à relever ce dernier notamment par une rotation de l'arbre de sortie 40 du moteur 12, dans le sens inverse du sens d'usinage, ce qui entraînerait grâce aux forces de frottement ou à un antidévireur mécanique de type roue libre ou visqueux (non représenté), le basculement du chariot mobile 13 du côté opposé à l'axe de rotation 18 du disque abrasif 4, libérant ainsi l'accès aux moyens de fixations 6 et 8 pour les opérations suivantes.

La paroi 3 est avantageusement réalisée en matière électriquement isolante de manière à permettre la détection de présence de liquide lubrifiant dans le compartiment 31 d'usinage par mesure de la résistivité en appliquant une tension entre les supports de paliers 20 et 21. Ce montage permet en outre avantageusement de détecter le contact électrique entre le chariot mobile 13, et le support de paliers 20, afin d'informer l'électronique de contrôle de la fin d'usinage.

Le compartiment d'usinage 31 est avantageusement muni d'un capot articulé 70, comme représenté sur la figure 2, permettant un accès à l'intérieur du compartiment 31 et une protection de l'environnement extérieur de la machine contre les projections de liquide lubrifiant, lors de l'opération d'usinage. La machine comprend en outre avantageusement des moyens d'ouverture (non représentés) automatique du capot 70, fonctionnant en fin d'usinage. En outre, la machine peut comporter un système de verrouillage (non représentés) automatique du capot 70 permettant d'empêcher une ouverture intempestive de celui-ci en cours d'usinage.

Les moyens électroniques de commande et de contrôle sont constitués d'au moins une carte électronique entrées/sorties (non représentée) placée dans le compartiment moteur 32. Les entrées peuvent notamment être en liaison avec des capteurs comme suit : un capteur de niveau de liquide lubrifiant, un capteur de fin d'usinage, un capteur d'ouverture du couvercle du compartiment d'usinage, un capteur d'intensité du moteur de coupe 5, un capteur de température. Les sorties peuvent être en liaison avec les commandes suivantes : commande indépendante de chaque moteur, commande d'une interface visuelle pour l'utilisateur, commande d'un verrouillage/déverrouillage du capot 70.

Un exemple de mode de fonctionnement de la machine selon l'invention va maintenant être décrit, ce mode de fonctionnement pouvant être avantageusement mis en oeuvre en partie par un logiciel de pilotage automatique dans le cadre d'un fonctionnement automatique de la machine.

Le mode de fonctionnement suivant est décrit chronologiquement à partir de l'état de la machine en fin d'usinage et pour un usinage suivant :
- à l'ouverture du capot 70, le capteur d'ouverture envoie un signal à l'électronique de commande et de contrôle ; cette dernière répond en actionnant le moteur 11 qui va déplacer le moteur 12 en translation, donc l'arbre 16 et lui faire effectuer une série d'allers et retours de faible amplitude, afin de libérer le résidu d'ébauche issu d'un usinage précédent de son appui résiduel sur le disque d'usinage 4, puis un retour complet du chariot vers la paroi 3 ;
- simultanément, le moteur 12 se met en marche dans le sens inverse du sens d'usinage, entraînant l'arbre 16 qui entraîne lui-même grâce aux forces de frottement ou à un antidévireur comme expliqué plus haut, le basculement du chariot du côté opposé à l'axe 18 du moteur d'usinage, vers l'extérieur de la machine, pour faciliter les opérations suivantes ;
- l'opérateur peut séparer par dévissage les moyens de fixation 6, 8 de l'ébauche et du reproducteur, comme expliqué plus haut ; le reproducteur 9 est remplacé par décollement de l'ancien, et collage du nouveau grâce à la pointe faisant partie du support 8 qui sera collée dans un forage pratiqué dans le reproducteur ; l'ébauche est remplacée soit par décollage de l'ancienne, soit par remplacement de ses moyens de fixation 6 qui peuvent être à usage unique ; le reproducteur, son support, et un support d'ébauche vierge sont assemblés sur l'élément tubulaire 50 ;
- afin d'optimiser la quantité de matière à usiner, l'opérateur présente différents gabarits 60 de centrage sur le reproducteur 9, et choisit le plus petit pouvant s'engager sur celui-ci ; le dispositif de centrage est ensuite rabattu sur le chariot, plaqué contre les plans de référence, 67, 68 par exemple, et l'ébauche 7 correspondante est enduite de colle à prise instantanée, et glissée sur le logement 63 qui lui est réservé sur le gabarit 60 de centrage, pour venir s'assembler par collage avec les moyens de fixation 6 d'ébauche ;
   le chariot 13 est rabattu vers le côté interne du compartiment 31 d'usinage, et éventuellement déplacé, grâce à des boutons poussoirs commandant avantageusement une avance et un recul rapide du chariot, vers le départ d'usinage souhaité ; le capot de protection est fermé par l'opérateur ; les moyens électroniques de contrôle contrôlent le niveau d'eau, par exemple par analyse de la résistivité entre les moyens d'usinage, et les moyens de déplacement ; les moyens électroniques de contrôle contrôlent la fermeture du capot 70 grâce à un interrupteur à lame souple par exemple placé dans la partie fixe du carter 30, et un aimant placé dans le capot qui vient s'approcher à la fermeture ; si ces deux contrôles sont conformes, la machine est en attente, et par appui sur un quelconque des deux boutons poussoirs décrits ci-dessus, l'usinage est démarré ;
   le moteur de rotation 12 entraîne en rotation l'arbre 16 qui entraîne par l'intermédiaire de la courroie 17, l'élément tubulaire 50, donc l'ébauche 7 et le reproducteur 9 en rotation, ainsi que le chariot 13 qui est plaqué vers le disque 4 et le palpeur 10 grâce aux forces de frottement internes ; simultanément, le moteur d'avance 11 se met en route, et grâce au système vis-écrou 14, 15, il entraîne en translation le moteur 12, l'arbre 16, et donc l'ébauche et le reproducteur, permettant ainsi une exploration systématique de la surface externe du reproducteur par le palpeur, excepté les zones concaves ; simultanément, le moteur de coupe 5 se met en route, entraînant en rotation le disque abrasif 4 ; pendant toute la phase d'usinage, les entrées des moyens électroniques contrôlent un certain nombre de capteurs dont la fermeture du capot, le niveau d'eau, la température interne, l'intensité du moteur de coupe 5, les boutons poussoirs manuels : si un quelconque des deux boutons poussoirs est enfoncé, il joue le rôle d'arrêt d'urgence ; la fin d'usinage par détection d'un contact électrique entre le chariot 13 ou les moyens de fixation de l'ébauche 6 d'une part, et le support de paliers 20 ou le disque abrasif 4, ou un autre élément de l'ensemble d'usinage d'autre part, l'intensité du moteur de coupe 5 peut piloter la vitesse des moteurs 11 et 12 grâce à un asservissement destiné à optimiser la vitesse d'usinage en fonction des efforts d'usinage ;
- quand le mouvement d'avance du chariot 13 est tel que le reproducteur n'est plus soutenu par le palpeur, le chariot chute vers le support de paliers 20 du sous-ensemble d'usinage, le contact électrique se fait et les trois moteurs 5, 11, 12 s'arrêtent ; la pièce usinée est sectionnée du reste de l'ébauche, et chute dans le fond du compartiment d'usinage 31 , si la chute ne s'effectuait pas, l'usinage se poursuivrait jusqu'à épuisement de l'ébauche les moyens de fixation de l'ébauche atteindraient le disque abrasif métallique lui aussi, et le contact de fin d'usinage viendrait alors provoquer un arrêt des trois moteurs ; le cycle est terminé, et retourne à son début à l'ouverture du capot ; le capot ouvert, celui-ci est amovible par extraction de son axe, permettant une vidange et un nettoyage aisé du compartiment d'usinage 31.

## Revendications

1. Machine (1) permettant d'usiner au moins un volume, notamment un inlay, de manière automatique par copiage, comprenant au moins :
- un disque abrasif (4) muni d'un axe de symétrie (18) et possédant un degré de liberté en rotation autour dudit axe de symétrie,
- des moyens d'entraînement en rotation (5) dudit disque abrasif autour de son axe de symétrie,
- des moyens de fixation (6) d'une ébauche (7), dans laquelle ledit volume est usiné, possédant au moins un degré de liberté en rotation,
- des moyens d'entraînement en rotation (12, 16, 17) desdits moyens de fixation (6) de l'ébauche,
- des moyens de fixation (8) d'un reproducteur (9), possédant au moins un degré de liberté en rotation,
- des moyens d'entraînement en rotation (12, 16, 17) desdits moyens de fixation (8) du reproducteur,
- un palpeur (10) apte à entrer en contact avec la surface extérieure dudit reproducteur,
- des moyens de déplacement (11, 13, 14, 15, 16) desdits moyens de fixation (6) de l'ébauche par rapport au disque abrasif d'une part, et desdits moyens de fixation (8) du reproducteur par rapport audit palpeur (10) d'autre part, lesdits moyens de déplacement comprennant un chariot mobile (13) sur lequel sont montés libres en rotation lesdits moyens de fixation (6) de l'ébauche et lesdits moyens de fixation (8) du reproducteur, ledit chariot mobile possédant au moins deux degrés de liberté de mouvement, et permettant au disque abrasif et au palpeur de rester en contact permanent respectivement avec ladite ébauche et ledit reproducteur pendant l'usinage,
- des moyens de commande et de contrôle desdits moyens d'entraînement en rotation du disque abrasif, desdits moyens d'entraînement en rotation des moyens de fixation du reproducteur, et desdits moyens de déplacement.

2. Machine selon la revendication 1, ***caractérisée en ce que*** lesdits deux degrés de liberté dudit chariot mobile (13) sont un degré de liberté en rotation et un degré de liberté en translation, et **en ce que** lesdits moyens de déplacement comprennent des moyens d'entraînement en translation (11, 14, 15) et des moyens d'entraînement en rotation dudit chariot mobile.

3. Machine selon la revendication 2, ***caractérisée en ce qu***'elle comprend un support rigide (3), en ce que lesdits moyens d'entraînement en translation dudit chariot mobile comportent un premier moteur (11) lié de manière complète au dit support rigide, en ce que lesdits moyens d'entraînement en rotation desdits moyens de fixation (6) de l'ébauche et desdits moyens de fixation (8) du reproducteur (9) comportent un deuxième moteur (12) lié au dit premier moteur (11) par l'intermédiaire d'une liaison vis-écrou (14, 15), et en ce que ledit chariot mobile (13) est libre en rotation autour de l'arbre de sortie (16) dudit deuxième moteur, ledit arbre de sortie (16) étant guidé en rotation et en translation par ledit support rigide.

4. Machine selon la revendication 3, ***caractérisée en ce que*** lesdits moyens d'entraînement en rotation dudit chariot mobile (13) autour de l'arbre de sortie (16) dudit deuxième moteur comprennent les forces de frottements engendrées par la rotation desdits moyens de fixation (6) de l'ébauche et desdits moyens de fixation (8) du reproducteur (9).

5. Machine selon la revendication 4, ***caractérisée en ce que*** lesdits moyens de fixation (6) de l'ébauche et lesdits moyens de fixation (8) du reproducteur (9) sont liés de manière complète et possèdent des axes de rotation alignés.

6. Machine selon la revendication 5, ***caractérisée en ce que*** l'axe de rotation (18) dudit disque abrasif (4) est parallèle aux axes de rotation desdits moyens de fixation (6) de l'ébauche et desdits moyens de fixation (8) du reproducteur (9), ledit support rigide (3) comprenant une paroi plane perpendiculaire au dit axe de rotation du disque abrasif permettant une séparation entre un compartiment usinage et un compartiment moteur.

7. Machine selon la revendication 6, ***caractérisée en ce que*** l'axe de rotation (18) dudit disque abrasif et l'arbre de sortie (16) dudit deuxième moteur sont montés dans des supports de paliers respectifs identiques.

8. Machine selon l'une quelconque des revendications 1 à 7, ***caractérisée en ce que*** ledit palpeur (10) est fixé rigidement au dit support rigide (3), afin de compenser par son abrasion résultant du frottement avec le reproducteur (9), l'usure dudit disque abrasif (4).

9. Machine selon l'une quelconque des revendications 1 à 7, ***caractérisée en ce qu***'elle comporte des moyens de déplacement radial dudit palpeur (10), permettant d'établir un rapport dimensionnel de reproduction déterminé de l'inlay par rapport au reproducteur (9), dans un plan perpendiculaire à un axe de rotation dudit reproducteur.

10. Machine selon l'une quelconque des revendications 1 à 9, ***caractérisée en ce que*** ledit palpeur (10) comporte une épaisseur supérieure à l'épaisseur dudit disque abrasif (4) pour augmenter la dimension longitudinale de l'inlay par rapport à celle dudit reproducteur (9).

11. Machine selon l'une quelconque des revendications 5 à 10, ***caractérisée en ce que*** lesdits moyens de fixation (6) de l'ébauche et lesdits moyens de fixation (8) du reproducteur (9) sont liés par une liaison vis-écrou, lesdits moyens de fixation de l'ébauche étant fixés de manière rigide sur l'un desdits éléments vis ou écrou, et lesdits moyens de fixation du reproducteur étant fixés de manière rigide sur l'autre complémentaire desdits éléments vis ou écrou.

12. Machine selon l'une quelconque des revendications 1 à 11, ***caractérisée en ce qu***'elle comprend des moyens d'arrêt automatique de fonctionnement en fin d'usinage par détection d'une position déterminée dudit chariot mobile (13).

13. Machine selon l'une quelconque des revendications 1 à 12, ***caractérisée en ce qu***'elle comprend un disque (4) abrasif sur toute ou partie de ses deux faces opposées, lesdites deux faces opposées étant convergentes vers la périphérie du disque.

14. Machine selon l'une quelconque des revendications 1 à 13, ***caractérisée en ce qu***'elle comprend des moyens d'asservissement desdits moyens de déplacement à l'effort exercé par le disque abrasif (4) sur l'ébauche (7).

15. Machine selon l'une quelconque des revendications 1 à 14, ***caractérisée en ce qu***'elle comprend des moyens de lubrification dudit disque d'usinage (4) par barbotage.

16. Machine selon l'une quelconque des revendications 1 à 15, ***caractérisée en ce qu***'elle comprend des moyens d'inversion du sens de rotation dudit disque abrasif (4).

17. Machine selon l'une quelconque des revendications 1 à 16, ***caractérisée en ce qu***'elle comprend des moyens de dégagement automatique dudit chariot mobile (13) en fin d'usinage.

18. Machine selon l'une quelconque des revendications 1 à 17, ***caractérisée en ce qu***'elle comprend un gabarit de centrage permettant d'assurer une fixation de l'ébauche (7) sur lesdits moyens de fixation (6) de l'ébauche, et une fixation du reproducteur (9) sur lesdits moyens de fixation du reproducteur de telle sorte que l'inlay à obtenir soit inscrit dans le volume de l'ébauche.

19. Machine selon l'une quelconque des revendications 1 à 17, ***caractérisée en ce que*** ladite ébauche (7) et ledit reproducteur (9) sont fixés sur leurs moyens de fixation respectifs par au plus une de leurs extrémités respectives.

## Claims

1. A machine (1) for machining at least one volume, particularly an inlay, automatically by copying, comprising at least:
- an abrasive disk (4) with an axis of symmetry (18) and having at least one degree of freedom in rotation about said axis of symmetry,
- means (5) for driving the rotation of the said abrasive disk about its axis of symmetry,
- means (6) for securing a blank (7), in which said volume is machined, having at least one degree of freedom in rotation,
- means (12, 16, 17) for driving the rotation of said blank-securing means (6),
- means (8) for securing a template (9), having at least one degree of freedom in rotation,
- means (12, 16, 17) for driving the rotation of said template-securing means (8),
- a feeler (10) capable of coming into contact with the exterior surface of said template,
- means (11, 13, 14, 15, 16) for bringing about movement between said blank-securing means (6) and said abrasive disk, on the one hand, and between said template-securing means (8) and said feeler (10) on the other hand, said movement means comprise a moving carriage (13) on which said blank-securing means (6) and said template-securing means (8) are mounted so that they are free to rotate, said moving carriage having at least two degrees of freedom of movement and allowing the machining tool and the feeler to remain in constant contact with, respectively, said blank and said template during the machining,
- means for commanding and controlling said means for driving the rotation of the machining tool, said means for driving rotation of the template-securing means and said movement means.

2. The machine as claimed in claim 1, **characterized in that** said two degrees of freedom of said moving carriage (13) are one degree of freedom in rotation and one degree of freedom in translation, and **in that** said movement means comprise means (11, 14, 15) for driving the translation and means for driving the rotation of said moving carriage.

3. The machine as claimed in claim 2, **characterized in that** it comprises a rigid support (3) and **in that** said means for driving the translation of said moving carriage comprise a first motor (11) connected completely to said rigid support, **in that** said means for driving the rotation of said blank-securing means (6) and said means (8) for securing the template (9) comprise a second motor (12) connected to said first motor (11) via a screw-nut connection (14, 15), and **in that** said moving carriage (13) is free in rotation about the output shaft (16) of said second motor, said output shaft (16) being guided in rotation and in translation by said rigid support.

4. The machine as claimed in claim 3, **characterized in that** said means for driving the rotation of said moving carriage (13) about the output shaft (16) of said second motor comprise the friction forces generated by the rotation of said blank-securing means (6) and of said means (8) for securing the template (9).

5. The machine as claimed in claim 4, **characterized in that** said blank-securing means (6) and said means (8) for securing the template (9) are connected completely and have aligned axes of rotation.

6. The machine as claimed in claim 5, **characterized in that** the axis of rotation (18) of said abrasive disk (4) is parallel to the axes of rotation of said blank-securing means (6) and of said means (8) for securing the template (9), said rigid support (3) having a flat wall perpendicular to said axis of rotation of the abrasive disk separating a machining compartment from a drive compartment.

7. The machine as claimed in claim 6, **characterized in that** the axis of rotation (18) of said abrasive disk and the output shaft (16) of said second motor are mounted in identical respective bearing supports.

8. The machine as claimed in any one of claims 1 to 7, **characterized in that** said feeler (10) is secured rigidly to said rigid support (3) so as, by its abrasion resulting from the rubbing against the template (9), to compensate for the wear of said abrasive disk (4).

9. The machine as claimed in any of claims 1 to 7, **characterized in that** it comprises means for moving said feeler (10) radially, making it possible to establish a given dimensional ratio at which the inlay is reproduced with respect to the template (9), in a plane perpendicular to an axis of rotation of said template.

10. The machine as claimed in any one of claims 1 to 9, **characterized in that** said feeler (10) has a thickness greater than the thickness of said abrasive disk (4) so as to increase the longitudinal dimension of the inlay with respect to that of said template (9).

11. The machine as claimed in any one of claims 5 to 10, **characterized in that** said blank-securing means (6) and said means (8) for securing the template (9) are connected by a screw-nut connection, said blank-securing means being secured rigidly to one of said elements - screw or nut - and said template-securing means being secured rigidly to the complementary other one of said elements - nut or screw.

12. The machine as claimed in any one of claims 1 to 11, **characterized in that** it comprises means for automatically stopping operation at the end of machining by detecting that said moving carriage (13) is in a given position.

13. The machine as claimed in any one of claims 1 to 12, **characterized in that** it comprises a disk (4) which is abrasive over all or part of its two opposite faces, said two opposite faces converging toward the periphery of the disk.

14. The machine as claimed in any one of claims 1 to 13, **characterized in that** it comprises means for slaving said movement means to the force exerted by the abrasive disk (4) on the blank (7).

15. The machine as claimed in any one of claims 1 to 14, **characterized in that** it comprises means for lubricating said machining disk (4) by splash lubrication.

16. The machine as claimed in any one of claims 1 to 15, **characterized in that** it comprises means for reversing the direction of rotation of said abrasive disk (4).

17. The machine as claimed in any one of claims 1 to 16, **characterized in that** it comprises means for automatically clearing said moving carriage (13) at the end of machining.

18. The machine as claimed in any one of claims 1 to 17, **characterized in that** it comprises a centering jig allowing the blank (7) to be secured to said blank-securing means (6), and allowing the template (9) to be secured to said template-securing means in such a way that the inlay to be obtained lies within the volume of the blank.

19. The machine as claimed in any one of claims 1 to 17, **characterized in that** said blank (7) and said template (9) are secured to their respective securing means via at least one of their respective ends.

## Patentansprüche

1. Maschine (1) zur Herstellung wenigstens eines Raumkörpers, insbesondere eines Inlays, auf automatische Weise durch Kopieren, umfassend wenigstens:
- eine Schleifscheibe (4), welches mit einer Symetrieachse (18) versehen ist und wenigstens einen Freiheitsgrad bezüglich der Rotation um diese Symetrieachse aufweist,
- Antriebsmittel (5), um die Schleifscheibe um ihre Symmetrieachse in Drehung zu versetzen,
- Befestigungsmittel (6) für einen Rohling (7), aus welchem der Raumkörper hergestellt wird, die wenigstens einen Freiheitsgrad bezüglich Drehung aufweisen,
- Antriebsmittel (12, 16, 17) zur Drehung der Befestigungsmittel (6) des Rohlings,
- Befestigungsmittel (8) für eine Vorlage (9), die mindestens einen Freiheitsgrad in Drehrichtung aufweisen,
- Antriebsmittel (12, 16, 17), um die Befestigungsmittel (8) der Vorlage in Drehung zu versetzen,
- einen Fühler (10), der geeignet ist, mit der Außenfläche der Vorlage in Berührung zu treten,
- Verstellmittel (11, 13, 14, 15, 16) zum Verstellen der Befestigungsmittel (6) des Rohlings in Bezug auf die Schleifscheibe einerseits und zum Verstellen der Befestigungsmittel (8) der Vorlage in Bezug auf den Fühler (10) andererseits, wobei die Verstellmittel einen beweglichen Schlitten (13) umfassen, auf welchem die frei drehbaren Befestigungsmittel (6) des Rohlings und die Befestigungsmittel (8) der Vorlage befestigt sind, wobei der bewegliche Schlitten wenigstens zwei Freiheitsgrade bezüglich der Bewegung aufweist und der Schleifscheibe und dem Fühler einen fortwährenden Kontakt mit dem Rohling bzw. mit der Vorlage ermöglichen,
- Steuer- und Regelmittel für die Antriebsmittel für die Drehung des Werkzeuges, der Antriebsmittel für die Drehung der Befestigungsmittel der Vorlage und die Verstellmittel.

2. Maschine nach Anspruch 1, **dadurch gekennzeichnet, dass** die beiden Freiheitsgrade des beweglichen Schlittens (13) ein Freiheitsgrad in Drehrichtung und ein Freiheitsgrad in Translationsrichtung sind, und dass die Verstellmittel Antriebsmittel (11, 14, 15) in Translationsrichtung und Antriebsmittel zur Drehung des beweglichen Schlittens aufweisen.

3. Maschine nach Anspruch 2, **dadurch gekennzeichnet, dass** ein steifer Träger (3) vorgesehen ist, dass die Antriebsmittel in Translationsrichtung des beweglichen Schlittens einen ersten Motor (11) umfassen, welcher vollständig an dem steifen Träger befestigt ist, dass die Antriebsmittel für die Drehung der Befestigungsmittel (6) des Rohlings und die Befestigungsmittel (8) der Vorlage (9) einen zweiten Motor (12) umfassen, der mit dem ersten Motor (11) über eine Schraubverbindung (14, 15) verbunden ist, und dass der bewegliche Schlitten (13) frei um die Antriebswelle (16) des zweiten Motors drehbar ist, wobei die Antriebswelle (16) in Drehrichtung und in Translationsrichtung durch dem steifen Träger gelagert ist.

4. Maschine nach Anspruch 3, **dadurch gekennzeichnet, dass** die Antriebsmittel für die Drehung des beweglichen Schlittens (13) um die Antriebswelle (16) des zweiten Motors die Reibkräfte umfassen, die durch die Drehung der Befestigungsmittel (6) des Rohlings und die Befestigungsmittel (8) der Vorlage (9) erzeugt werden.

5. Maschine nach Anspruch 4, **dadurch gekennzeichnet, dass** die Befestigungsmittel (6) des Rohlings und die Befestigungsmittel (8) der Vorlage (9) miteinender verbunden sind und miteinander fluchtende Drehachsen aufweisen.

6. Maschine nach Anspruch 5, **dadurch gekennzeichnet, dass** die Drehachse (18) der Schleifscheibe (4) parallel zu den Drehachsen der Befestigungsmittel (6) des Rohlings und der Befestigungsmittel (8) der Vorlage (9) ist, dass der steife Träger (3) eine ebene Wand senkrecht zu der Rotationsachse der Schleifscheibe aufweist, welche eine Unterteilung in einen Werkzeugraum und einen Motorraum ermöglicht.

7. Maschine nach Anspruch 6, **dadurch gekennzeichnet, dass** die Drehachse (18) der Schleifscheibe und die Antriebswelle (16) des zweiten Motors in denselben Lagerträgern befestigt sind.

8. Maschine nach einem der Ansprüche 1 bis 7 **dadurch gekennzeichnet, dass** der Fühler (10) starr an dem steifen Träger (3) befestigt ist, um mit seinem durch die Reibung an der Vorlage (9) erzeugten Abrieb die Abnutzung der Schleifscheibe (4) auszugleichen.

9. Maschine nach einem der Ansprüche 1 bis 7, **dadurch gekennzeichnet, dass** sie Verstellmittel für den Fühler (10) in radialer Richtung aufweist, mit denen eine vorbestimmte maßstäbliche Wiedergabe des Inlays in Bezug auf die Vorlage (9), in einer Ebene senkrecht zu einer Rotationsachse der Vorlage, herstellbar ist.

10. Maschine nach einem der Ansprüche 1 bis 9, **dadurch gekennzeichnet, dass** der Fühler (10) eine größere Dicke als die Schleifscheibe (4) aufweist, um die Abmessung in Längsrichtung des Inlays bezüglich der Vorlage (9) zu vergrößern.

11. Maschine nach einem der Ansprüche 5 bis 10, **dadurch gekennzeichnet, dass** die Befestigungsmittel (6) des Rohlings und die Befestigungsmittel (8) der Vorlage (9) über eine Schraubverbindung miteinander verbunden sind, wobei die Befestigungsmittel des Rohlings starr auf einem der Bauteile Schraube oder Mutter befestigt sind, und die Befestigungsmittel der Vorlage starr auf dem entsprechenden Bauteil der Schraube oder der Mutter angeordnet sind.

12. Maschine nach einem der Ansprüche 1 bis 11, **dadurch gekennzeichnet, dass** sie Mittel zur automatischen Abschaltung am Ende der Bearbeitung aufweist, in dem eine vorgegebene Stellung des beweglichen Schlittens (13) festgestellt wird.

13. Maschine nach einem der Ansprüche 1 bis 12, **dadurch gekennzeichnet, dass** sie eine Schleifscheibe (4) umfaßt, die auf Ihren beiden einander gegenüberliegenden Seiten vollständig oder teilweise abrasiv ist, wobei die beiden gegenüberliegenden Seitenflächen zum Außenumfang der Scheibe hin konvergieren.

14. Maschine nach einem der Ansprüche 1 bis 13, **dadurch gekennzeichnet, dass** ein Regelsystem für die Verstellmittel in Abhängigkeit der von der Schleifscheibe (4) auf den Rohling (7) ausgeübten Kraft vorhanden ist.

15. Maschine nach einem der Ansprüche 1 bis 14, **dadurch gekennzeichnet, dass** Mittel zur Schmierung der Werkzeugscheibe (4) im Wege der Spritzschmierung vorhanden sind.

16. Maschine nach einem der Ansprüche 1 bis 15, **dadurch gekennzeichnet, dass** Umschaltmittel für die Drehrichtung der Schleifscheibe (4) vorgesehen sind.

17. Maschine nach einem der Ansprüche 1 bis 16, **dadurch gekennzeichnet, dass** Mittel zum automatischen Herausfahren des beweglichen Schlittens (13) am Ende der Bearbeitung vorhanden sind.

18. Maschine nach einem der Ansprüche 1 bis 17, **dadurch gekennzeichnet, dass** sie eine Zentriervorrichtung umfaßt, mittels welcher eine Befestigung des Rohlings (7) an den Befestigungsmitteln (6) des Rohlings und eine Befestigung der Vorlage (9) an den Befestigungsmitteln der Vorlage derart bewirkt wird, dass das Inlay innerhalb des von dem Rohling umgrenzten Raumes liegt.

19. Maschine nach einem der Ansprüche 1 bis 18, **dadurch gekennzeichnet, dass** der Rohling (7) und die Vorlage (9) auf ihren jeweiligen Befestigungsmitteln höchstens an einem ihrer jeweiligen Enden befestigt ist.
